# FASCICULE DE BREVET EUROPEEN

(11) **EP 1 218 215 B1**
(45) Date de publication et mention de la délivrance du brevet: **02.05.2003**
(21) Numéro de dépôt: 00967946.5
(22) Date de dépôt: 04.10.2000
(51) Int. Cl.: B60K 41/00

(54) **DISPOSITIF DE CONDUITE MANUELLE D'UN KART POUR LES PERSONNES HANDICAPEES DES MEMBRES INFERIEURS ET KART AINSI EQUIPE**
VORRICHTUNG ZUM FAHREN EINES KARTS MIT DEN HÄNDEN FÜR PERSONEN MIT BEINBEHINDERUNGEN UND DAMIT AUSGERÜSTETES KART
DEVICE FOR MANUALLY DRIVING A GO-KART FOR PEOPLE WITH LOWER-LIMB HANDICAP AND GO-KART EQUIPPED WITH SAME

(30) Priorité: 05.10.1999 FR 9912396
(43) Date de publication de la demande: 03.07.2002
(73) Titulaire: Okey Technologie, 78570 Chanteloup les Vignes (FR)
(72) Inventeur: POCHON, Jean-Pierre, F-84110 Buisson (FR); FORGES, Philippe, F-78590 Noisy-le-Roi (FR)
(74) Mandataire: Jolly, Jean-Pierre
(86) Numéro de dépôt international: FR0002758
(87) Numéro de publication internationale: WO01025047

(56) Documents cités:
- EP-A- 0 114 673
- EP-A- 0 681 938
- FR-A- 2 670 739
- US-A- 2 200 625
- US-A- 4 143 734
- US-A- 4 896 899

## Description

L'invention concerne un dispositif de conduite manuelle d'un kart pour les personnes handicapées des membres inférieurs et en particulier un dispositif de commande manuelle du frein et de l'accélérateur pour kart.

Les commandes du frein et de l'accélérateur sur un kart sont normalement actionnées au pied au moyen de pédales indépendantes en bonne place pour le conducteur. Néanmoins, ce mode de conduite n'est pas accessible aux personnes handicapées des membres inférieurs.

L'invention vise à pallier cet inconvénient.

Dans l'état de la technique proche, on connaît par FR 2 597 038 au nom de la demanderesse un dispositif à anneau de commande manuelle d'accélération pour véhicule à moteur, l'anneau entraînant un élément monté coulissant le long de la colonne de direction du véhicule et relié à un câble d'actionnement de l'accélérateur. Ce dispositif est amovible. Un tel dispositif n'intègre pas la commande manuelle de frein. US 4 143 734 sert de base pour la présentation en deux parties de la revendication 1.

Il est proposé selon l'invention un dispositif de conduite manuelle d'un kart pour les personnes handicapées des membres inférieurs, caractérisé en ce qu'il comprend deux leviers de commande manuelle, respectivement, du frein et de l'accélérateur du kart, montés sous le volant de direction, solidaires en rotation de celui-ci et en position adéquate pour être accessibles en traction vers le haut, chacun depuis la couronne du volant par une main du conducteur, lesdits leviers étant reliés à un boîtier de transmission de leur mouvement de façon adaptée aux pédales classiques respectives de frein et d'accélérateur du kart.

Lesdits leviers de commande manuelle du frein et de l'accélérateur sont avantageusement disposés diamétralement opposés sous le volant du kart, tournant avec celui-ci lors de sa manoeuvre sans être lâchés par les mains, sachant que la course de rotation du volant d'un kart est réduite, égale à environ un quart de tour depuis le point milieu.

Les leviers peuvent naturellement être montés dans une autre configuration géométrique de disposition naturelle des mains sur le volant, par exemple en V, ou encore dans une configuration adaptée à la personne handicapée.

Les poignées de préhension des leviers de commande sont avantageusement en forme de U, la partie de préhension pouvant être droite ou en arc de cercle ou proche, de rayon égal ou proche de celui de la couronne du volant du kart, et d'angle inférieur cassé pour éviter les chocs accidentels agressifs avec les genoux.

Les poignées sont montées amovibles, à montage et démontage rapides, pour permettre le retour aisé à la conduite normale aux pieds du kart, si on le souhaite.

La poignée de frein s'étend de préférence sur un secteur angulaire plus important que celui de la poignée d'accélérateur, ayant de surcroit une fonction de sécurité qui s'impose devant l'accélérateur.

Le rappel en position neutre de ces poignées est réalisé par ressort, de préférence disposé au niveau du boîtier de transmission et/ou de la pédale de frein ou d'accélérateur correspondante.

Les leviers de commande peuvent être montés articulés sur le volant, par exemple sur ses branches ou sur un plateau fixé au volant.

Le boîtier de transmission du mouvement peut être du type mécanique, à câbles de transmission reliés par un dispositif réducteur ou amplificateur de course, par exemple à poulie moufflée et boucle de câble, aux pédales de frein et d'accélérateur du kart.

Il peut également être de type électronique, relié à des capteurs de lecture du mouvement de chacun des leviers, par exemple de type potentiométrique, le mouvement étant converti en signal électrique et convenablement amplifié pour commander des organes moteurs d'actionnement respectivement du frein et de l'accélérateur du kart, ces organes moteur pouvant être reliés directement ou indirectement au frein ou à l'accélérateur.

Il peut encore être de type mixte, avec des câbles de transmission du mouvement et un dispositif d'assistance d'effort réglable selon la personne conductrice.

Naturellement, dans cet agencement de conduite manuelle par des personnes handicapées des membres inférieurs, les pieds et jambes de ces dernières pourront être reçus dans un berceau protecteur monté amovible sur le châssis du kart, ce berceau comportant deux boudins de maintien des jambes au niveau de chaque pédale et une traverse de liaison des boudins verrouillant l'accès aux pédales.

L'invention concerne également un kart ou un véhicule automobile ou automoteur équipé d'un dispositif de conduite manuelle selon l'invention.

L'invention est illustrée ci-après à l'aide d'un exemple de réalisation décrit en référence aux dessins annexés, sur lesquels :
- La figure 1 est une vue schématique d'un kart équipé d'un dispositif de conduite manuelle selon l'invention,
- La figure 2a est une vue en coupe schématique des éléments du dispositif monté sous le volant du kart,
- La figure 2b est une vue en coupe partielle du dispositif tourné coaxialement à 90° de la figure 2a, et
- la figure 3 montre les poignées de commandé avec leur système de montage et démontage rapides.

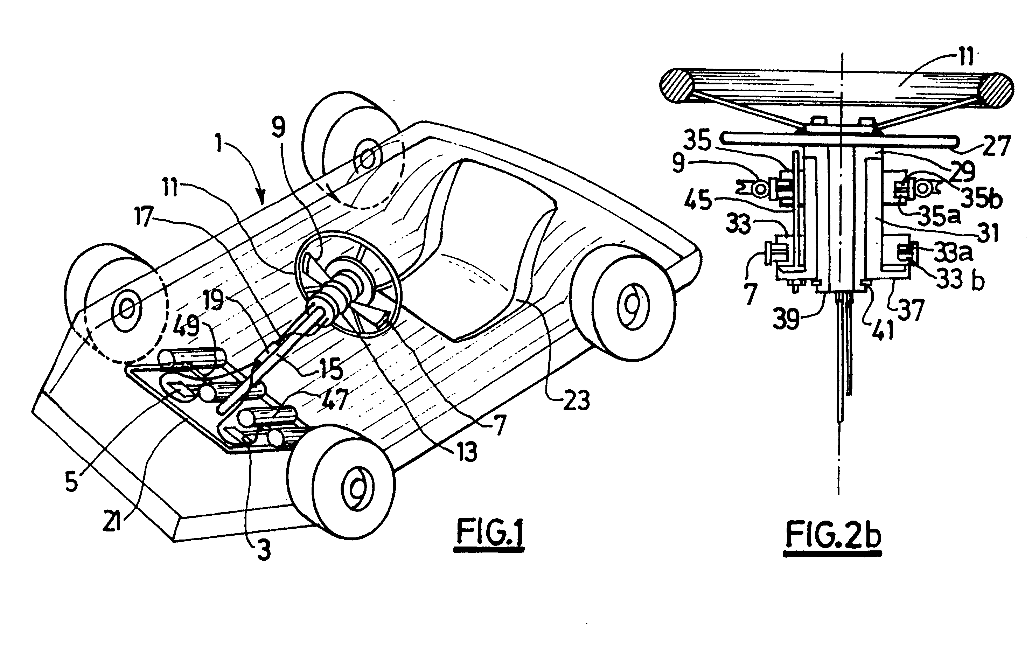

Comme représenté sur le dessin, le dispositif selon l'invention équipe un kart classique 1 (figure 1) dont la conduite est assurée au moyen de pédales de frein 3 et d'accélérateur 5, gauche et droite respectivement au niveau avant du kart. Le dispositif a pour but de remplacer les commandes de frein et d'accélérateur classiques par des leviers de commande manuelle de frein 7 et d'accélérateur 9 disposés sous le volant 11, de façon à permettre la conduite du kart par des personnes handicapées des membres inférieurs.

Le dispositif est amovible, à montage et démontage rapides de maniére à permettre une adaptation aisée au mode de conduite choisi, au moyen des pieds ou manuel.

Le dispositif est essentiellement constitué d'un ensemble 13 d'éléments de commande monté sur la colonne ou tige de direction 15 du kart sous le volant, d'un ensemble 17 de câbles de transmission du mouvement, relié à l'ensemble de commande 13 précité et s'étendant jusqu'aux pédales de frein 3 et d'accélérateur 5, d'un boîtier de transmission adaptateur 19 interposé sur ledit ensemble de câbles 17 et d'un cadre ou berceau protecteur 21 des jambes de la personne handicapée des membres inférieurs assise sur le siège 23 du kart.

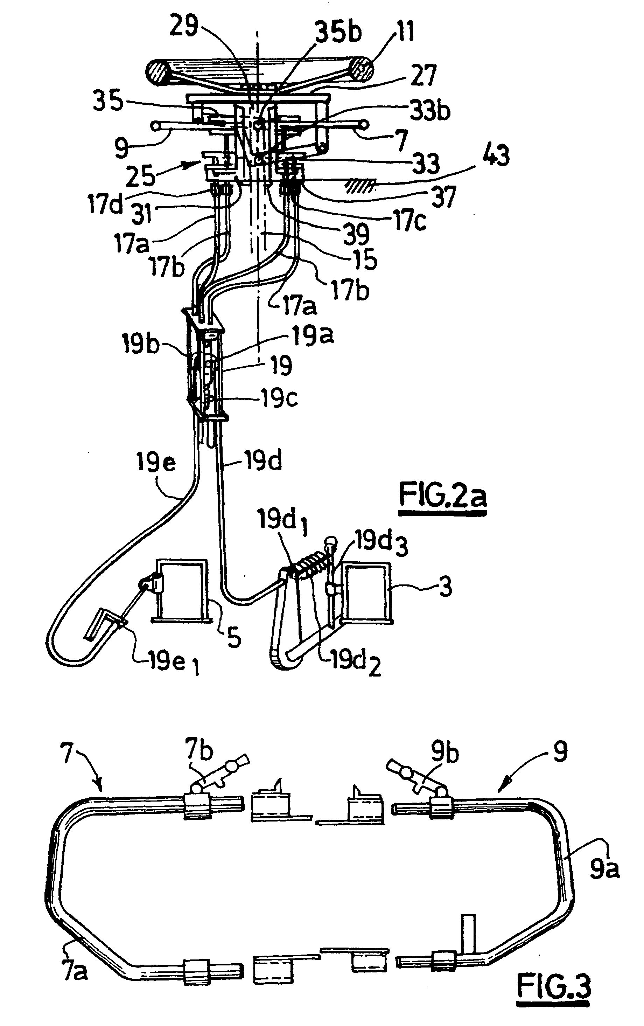

Avec référence également aux figures 2 et 3, l'ensemble d'éléments de commande 13 comporte un boîtier 25 sensiblement cylindrique disposé coaxialement à la tige de direction 15 et au volant 11 et deux leviers de commande manuelle 7 et 9, respectivement du frein et de l'accélérateur du kart.

Le boîtier 25 est constitué d'un plateau supérieur 27 à forme de disque fixé coaxialement au moyen de vis au volant, d'un moyeu central 29 solidaire du plateau 27 et donc mobile en rotation, d'un moyeu inférieur fixe 31 solidaire d'un élément de châssis 43 et monté sur le moyeu central 29 et de deux disques dits baladeurs, inférieur 33 et supérieur 35, montés mobiles sur le moyeu fixe 31. Les moyeux central 29 et inférieur 31 sont montés sur la tige de direction, coaxialement à celle-ci et juste sous le plateau supérieur 27. Le moyeu inférieur 31 comporte une joue circulaire inférieure 37 de retenue du disque baladeur inférieur 33. Le corps cylindrique du moyeu central 29 dépasse légèrement de cette joue 37 par une partie en saillie 39, laquelle reçoit une bague externe 41 maintenant le moyeu inférieur 31. Ce dernier est donc supporté par le moyeu central, étant verrouillé en rotation par la patte latérale 43 solidaire d'une partie de châssis du kart.

Les disques baladeurs 33, 35 sont montés à faible jeu sur le corps cylindrique du moyeu inférieur 31, avec liberté de translation dans le sens axial, étant guidés par une tige colonne commune 45 (figure 2b) qui les traverse axialement, laquelle est fixée sur la joue inférieure 37 du moyeu fixe et s'étend sensiblement jusqu'au plateau supérieur 27.

Les disques baladeurs sont pourvus chacun d'une gorge circulaire circonférentielle régulière 33a et 35a recevant deux galets 33b et 35b à faible jeu, diamétralement opposés. Ces galets sont solidaires respectivement des leviers de commande 7 et 9. En position neutre, les disques baladeurs sont distants l'un de l'autre, respectivement de la course maximum du baladeur inférieur, et de même pour le baladeur supérieur d'une distance sous le plateau supérieur correspondant à sa propre course.

Les leviers de commande sont montés articulés au plateau supérieur 27, sous celui-ci et dans une disposition diamétralement opposés. Ils coopèrent chacun avec un disque baladeur au moyen desdits galets opposés en vue de la translation axiale de ceux-ci sur le moyeu fixe. Ils comportent chacun (figure 3) une partie poignée tubulaire respectivement, 7a et 9a montée amovible par emmanchement verrouillé par grenouillère souple 7b et 9b. Les poignées 7a et 9a s'étendent sensiblement parallèlement au volant (à la couronne) suivant une longueur légèrement supérieure à la largeur d'une main moyenne. La poignée de frein 7a gauche est légèrement plus longue que celle de l'accélérateur 9a droite.

Les câbles de transmission sont au nombre de deux, une boucle à deux brins pour le frein 17a et une boucle à deux brins pour l'accélérateur 17b, avec quatre sorties 17c et 17d sur la joue 37, correspondantes deux à deux pour chaque boucle. Ils sont reliés en alignement et avec symétrie axiale, respectivement, à chacun des disques baladeurs 33 et 35. Ils transmettent leur mouvement respectif, issu de la traction du levier correspondant, au boîtier de transmission 19. La liaison des câbles en boucle avec symétrie axiale permet d'équilibrer les efforts de traction sur les disques 33, 35 de façon à éviter tout coincement sur leur moyeu. La boucle extérieure 17a est reliée au disque baladeur de frein 33 et la boucle intérieure 17b au disque baladeur d'accélérateur 35, traversant le disque baladeur inférieur de frein 33.

Le boîtier de transmission 19 permet d'adapter la course de chacun des disques baladeurs 33, 35 à celles des pédales 3, 5 respectivement. Il comporte deux poulies 19a, 19b montées chacune sur un étrier adéquat et rappelé par un ressort 19c vers le bas. A chaque étrier de poulie sont reliés respectivement le câble de frein 17a par ses deux brins et le câble d'accélérateur 17b également par ses deux brins. Le boîtier transmet le mouvement des leviers de commande et donc des disques baladeurs aux pédales de frein et d'accélérateur au moyen de deux autres câbles 19d, 19e disposés en sortie du boîtier 19. Ces câbles 19d et 19e menant aux pédales de frein 3 et d'accélération 5, respectivement, sont enroulés chacun sur la poulie de câble de frein 19a et la poulie de câble d'accélérateur 19b. Les câbles 19d et 19e sont reliés aux pédales de façon classique par des arrêts de gaine fixes 19d₁ et 19e₁, respectivement, éventuellement avec rappel de la position neutre (pour le frein au moyen d'un ressort 19d₂ interposé entre un levier articulé 19d₃ amplificateur d'effort de la pédale de frein 3 et l'arrêt de gaine correspondant 19d₁.

Le berceau protecteur des jambes 21 est fixé de façon amovible sur le châssis à l'avant du kart. Il comporte quatre boudins souples 47 disposés deux à deux de chaque côté des pédales de frein et d'accélérateur, respectivement. Les boudins sont reliés deux à deux par une tige de butée transversale 49 disposée devant chaque pédale afin d'empêcher leur manoeuvre par les membres inférieurs de la personne handicapée, lesquels sont maintenus entre ces boudins 47.

Ce berceau protecteur 21 de même que les autres éléments du dispositif 25 et 19 se montent dans l'espace libre du kart et sans changement ou adaptation de structure d'un kart classique.

Le fonctionnement du dispositif est très simple. Une fois assise sur le siège avec ses jambes calées dans le berceau protecteur avant 21, la personne handicapée conduit le kart par la seule manoeuvre du volant 11 et simultanément des leviers de commande de l'accélérateur 9 et du frein 7. Ses mains saisissent simultanément la couronne de volant et chacune des poignées 7a, 9a des leviers de commande, tournant le volant et les leviers ensemble, les mains étant de chaque côté du volant, diamétralement opposées sur celui-ci. Le volant permet de faire appui pour tirer vers le haut les poignées des leviers et actionner ainsi les commandes de frein à gauche et d'accélérateur à droite. A fond de course, les poignées des leviers de commande sont proches de la couronne de volant ; La fin de course est arrêtée par mise en butée des leviers.

Le retour à la position de conduite classique au pied s'obtient de façon aisée en ôtant le berceau protecteur 21 et les parties poignées 7a et 9a des leviers de commande 7 et 9.

Enfin, on notera que le dispositif de commande manuel décrit peut être appliqué à un autre véhicule qu'un kart et par exemple à un véhicule automobile ou automoteur classique.

En outre, les leviers de commande peuvent être alignés sur un même côté du volant, avec des poignées de commande de l'accélérateur et du frein distinctes.

A la limite, les leviers peuvent être remplacés par un seul, la poignée pouvant être manoeuvrée dans deux sens de mouvement opposés pour commander le frein dans un sens et l'accélérateur dans l'autre.

## Revendications

1. Dispositif de conduite manuelle d'un kart pour les personnes handicapées des membres inférieurs, du type comprenant deux leviers de commande manuelle (7, 9), respectivement du frein et de l'accélérateur du kart, montés sous le volant de direction (11), solidaires en rotation de celui-ci et en position adéquate pour être accessibles en traction vers le haut, chacun depuis la couronne du volant (11) par une main du conducteur, lesdits leviers (7, 9) étant reliés à un boîtier de transmission (19) de leur mouvement de façon adaptée aux pédales classiques respectives (3, 5) de frein et d'accélérateur du kart, **caractérisé en ce qu'**il comporte un boîtier de commande (13) avec deux disques baladeurs (33, 35) coulissant sur un moyeu fixe (31) monté sur la tige de direction (15), **en ce que** les disques baladeurs (33, 35) sont entraînés sélectivement et guidés en translation axiale respectivement par lesdits leviers (7,9) de frein et d'accélérateur, les disques baladeurs (33, 35) étant d'une part reliés à des câbles de transmission (17) du mouvement au boîtier de transmission (19) et d'autre part écartés l'un de l'autre pour leur débattement propre en translation, et de même du volant (11) ou d'un plateau (27).

2. Dispositif de conduite manuelle d'un kart selon la revendication 1, **caractérisé en ce que** lesdits leviers de commande manuelle du frein et de l'accélérateur (7, 9) sont disposés diamétralement opposés sous le volant du kart, tournant avec celui-ci lors de sa manoeuvre sans être lâchés par les mains.

3. Dispositif de conduite manuelle d'un kart selon la revendication 1, **caractérisé en ce que** lesdits leviers (7, 9) sont montés dans une configuration géométrique de disposition naturelle des mains sur le volant (11), par exemple en V, ou encore dans une configuration adaptée à la personne handicapée.

4. Dispositif de conduite manuelle d'un kart selon l'une des revendications précédentes, **caractérisé en ce que** les poignées de préhension (7a, 9a) des leviers de commande (7, 9) sont en forme de U, dont la partie de préhension peut être droite ou en arc de cercle ou proche, de rayon égal ou proche de celui de la couronne de volant (11).

5. Dispositif de conduite manuelle d'un kart selon la revendication 4, **caractérisé en ce que** l'angle inférieur des poignées de préhension (7a, 9a) des leviers est cassé de manière à éviter le choc accidentel avec les genoux.

6. Dispositif de conduite manuelle d'un kart selon l'une des revendications 3-5, **caractérisé en ce que** les leviers de commande (7, 9) sont montés articulés sous le volant (11), par exemple sur ses branches ou sur un plateau (27) fixé au volant.

7. Dispositif de conduite manuelle d'un kart selon l'une des revendications 4-6, **caractérisé en ce que** les poignées (7a, 9a) sont montées amovibles, à montage et démontage rapides, pour permettre le retour de la conduite normale aux pieds du kart, si on le souhaite.

8. Dispositif de conduite manuelle d'un kart selon l'une des revendications 4-7, **caractérisé en ce que** la poignée de frein (7a) s'étend sur un secteur angulaire plus important que celui de la poignée d'accélérateur (9a).

9. Dispositif de conduite manuelle d'un kart selon l'une des revendications précédentes, **caractérisé en ce que** le rappel en position neutre des poignées ou leviers (7, 9) est réalisé par ressort (19c) , de préférence disposé au niveau du boîtier de transmission (19) et/ou éventuellement au niveau des pédales, de frein notamment en (19d₂).

10. Dispositif de conduite manuelle d'un kart selon l'une des revendications précédentes, **caractérisé en ce que** le boîtier de transmission du mouvement (19) est de type mécanique, à câbles de transmission (17) reliés par un dispositif réducteur ou amplificateur de course, par exemple à poulie moufflée (19a, 19b) et boucle de câble (19d, 19e), aux pédales (3, 5) de frein et d'accélérateur du kart.

11. Dispositif de conduite manuelle d'un kart selon l'une des revendications 1-9, **caractérisé en ce que** le boîtier de transmission (19) est de type électronique, relié à des capteurs de lecture du mouvement de chacun des leviers (7, 9), par exemple de type potentiométrique, le mouvement étant converti en signal électrique et convenablement amplifié pour commander des organes moteurs d'actionnement, respectivement, du frein et de l'accélérateur du kart.

12. Dispositif de conduite manuelle d'un kart selon l'une des revendications 1-9, **caractérisé en ce que** le boîtier de transmission (19) est de type mixte, avec câbles de transmission du mouvement et un dispositif d'assistance d'effort, réglable selon la personne conductrice.

13. Dispositif de conduite manuelle d'un kart selon l'une des revendications précédentes, **caractérisé en ce qu'**il comporte un berceau protecteur amovible (21), par lequel les pieds et jambes des personnes handicapées des membres inférieurs sont maintenus.

14. Dispositif de conduite manuelle d'un kart selon la revendication 1, **caractérisé en ce que** les leviers de commande manuelle sont alignés sur un même côté du volant, avec des poignées de commande de l'accélérateur et du frein distinctes.

15. Dispositif de conduite manuelle d'un kart selon la revendication 1, **caractérisé en ce que** à la limite, les leviers peuvent être remplacés par un seul, la poignée pouvant être manoeuvrée dans deux sens de mouvement opposés pour commander le frein dans un sens et l'accélérateur dans l'autre.

16. Kart, ou véhicule automobile ou automoteur **caractérisé en ce qu'**il comprend un dispositif de conduite manuel tel que défini selon l'une des revendications précédentes.

## Claims

1. A manual driving device for a go-kart for people with lower limb handicaps, of the type comprising two manual control levers (7, 9), respectively operating the brake and the accelerator of the go-kart, mounted under the steering wheel (11) and firmly connected for rotation therewith in an accessible position suitable for allowing them each to be pulled upwards from the steering wheel rim (11) by one of the driver's hands, said levers (7, 9) being connected to a transmission box (19) transmitting their movement in adapted manner to the respective conventional brake and accelerator pedals (3, 5) of the go-kart, **characterised in that** it comprises a control box (13) with two sliding disks (33, 35) sliding on a fixed hub (31) mounted on the steering shaft (15), **in that** the sliding disks (33, 35) are driven selectively and guided axially translationally respectively by said brake and accelerator levers (7, 9), the sliding disks (33, 35) being on the one hand connected to transmission cables (17) for transmitting the movement to the transmission box (19) and on the other hand separated from one another for their own translational displacement, and likewise from the steering wheel (11) or a plate (27).

2. A manual go-kart driving device according to claim 1, **characterised in that** said manual brake and accelerator control levers (7, 9) are disposed in diametrically opposed manner under the go-kart steering wheel, turning with it when it is operated without being released by the hands.

3. A manual go-kart driving device according to claim 1, **characterised in that** said levers (7, 9) are mounted in a geometric configuration matching the natural arrangement of the hands on the steering wheel (11), for example a V-shape, or in a configuration adapted to the handicapped person.

4. A manual go-kart driving device according to one of the preceding claims, **characterised in that** the gripping handles (7a, 9a) of the control levers (7, 9) are U-shaped, the gripping part of which may be straight or circular arc-shaped or close thereto, of identical or almost identical radius to that of the steering wheel rim (11).

5. A manual go-kart driving device according to claim 4, **characterised in that** the lower corners of the gripping handles (7a, 9a) of the levers are chamfered so to prevent accidental impact with the knees.

6. A manual go-kart driving device according to one of claims 3-5, **characterised in that** the control levers (7, 9) are mounted in articulated manner under the steering wheel (11), for example on the spokes thereof or on a plate (27) fixed to the steering wheel.

7. A manual go-kart driving device according to one of claims 4-6, **characterised in that** the handles (7a, 9a) are mounted removably, for rapid mounting and removal, to allow a return to normal foot-operated driving of the go-kart if so desired.

8. A manual go-kart driving device according to one of claims 4-7, **characterised in that** the brake handle (7a) extends over a larger angular sector than that of the accelerator handle (9a).

9. A manual go-kart driving device according to one of the preceding claims, **characterised in that** the handles or levers (7, 9) are returned to the neutral position by a spring (19c), preferably disposed at the level of the transmission box (19) and/or optionally at the level of the pedals, in particular the brake pedal at (19d₂).

10. A manual go-kart driving device according to one of the preceding claims, **characterised in that** the movement transmission box (19) is of mechanical type, with transmission cables (17) connected by a travel reducing or multiplying device, for example with a pulley block (19a, 19b) and cable loop (19d, 19e), to the go-kart brake and accelerator pedals (3, 5).

11. A manual go-kart driving device according to one of claims 1-9, **characterised in that** the transmission box (19) is electronic in type, connected to sensors reading the movement of each of the levers (7, 9), for example of the potentiometer type, the movement being converted into an electrical signal and suitably amplified to control driving elements respectively applying the brake and the accelerator of the go-kart.

12. A manual go-kart driving device according to one of claims 1-9, **characterised in that** the transmission box (19) is of mixed type, with movement transmission cables and a force boosting device, controllable by the driver.

13. A manual go-kart driving device according to one of the preceding claims, **characterised in that** it comprises a removable protective cradle (21), which holds the feet and legs of the people with lower limb handicaps.

14. A manual go-kart driving device according to claim 1, **characterised in that** the manual control levers are aligned on one and the same side of the steering wheel, with separate accelerator and brake control handles.

15. A manual go-kart driving device according to claim 1, **characterised in that**, if necessary, the levers may be replaced by a single one, the handle being capable of being moved in two opposing directions to control the brake in one direction and the accelerator in the other.

16. A go-kart, or automotive or self-propelled vehicle, **characterised in that** it comprises a manual driving device such as defined according to one of the preceding claims.

## Patentansprüche

1. Vorrichtung zum manuellen Führen eines Karts für Personen mit Beinbehinderungen, von der Art, welche zwei Hebel zur manuellen Betätigung (7, 9), und zwar jeweils einen für die Bremse und einen für das Gaspedal des Karts, aufweist, welche unter dem Lenkrad (11) angebracht, drehfest mit diesem verbunden und an geeigneter Position so angeordnet sind, dass sie dadurch zugänglich sind, dass sie vom Fahrer mit einer Hand jeweils vom Ring des Lenkrads (11) aus nach oben gezogen werden, wobei die Hebel (7, 9) mit einem Getriebe (19) zur Bewegungsübertragung in angepasster Weise mit den jeweiligen herkömmlichen Pedalen (3, 5) für die Bremse und das Gaspedal des Karts verbunden sind, **dadurch gekennzeichnet, dass** sie ein Steuergehäuse (13) mit zwei Schiebescheiben (33, 35) aufweist, welche auf einer feststehenden Nabe (31) verschieblich sind, die auf der Lenkstange (15) angebracht sind, dass die Schiebescheiben (33, 35) selektiv angetrieben und in einer axialen Translationsbewegung jeweils von den Hebeln (7, 9) zur Betätigung der Bremse und des Gaspedals gerührt werden, wobei die Schiebescheiben (33, 35) zum einen mit Seilzügen (17) für die Bewegungsübertragung am Getriebe (19) verbunden sind und zum anderen für ihre eigene Auslenkung bei der Translationsbewegung sowie der Auslenkung des Lenkrads (11) oder einer Lenkplatte (27) voneinander beabstandet sind.

2. Vorrichtung zum manuellen Führen eines Karts nach Anspruch 1, **dadurch gekennzeichnet, dass** die Hebel für die manuelle Betätigung der Bremse und des Gaspedals (7, 9) unter dem Lenkrad des Karts diametral einander gegenüber angeordnet sind und sich dabei mit dem Lenkrad drehen, wenn dieses betätigt wird, ohne dass sie von den Händen losgelassen werden.

3. Vorrichtung zum manuellen Führen eines Karts nach Anspruch 1, **dadurch gekennzeichnet, dass** die Hebel (7, 9) in einer geometrischen Ausbildung entsprechend der natürlichen Anordnung der Hände auf dem Lenkrad (11), beispielsweise in V-Anordnung, oder auch in einer an die behinderte Person angepassten Auslegung angebracht sind.

4. Vorrichtung zum manuellen Führen eines Karts nach einem der vorhergehenden Ansprüche, **dadurch gekennzeichnet, dass** die Handgriffe (7a, 9a) zum Erfassen der Betätigungshebel (7, 9) U-förmig ausgebildet sind, wobei ihr Griffteil geradlinig oder kreisbogenförmig sein kann oder bei gleichem Radius oder einem nahe kommenden Radius wie der Kranz des Lenkrads (11) dem Lenkrad angenähert sein kann.

5. Vorrichtung zum manuellen Führen eines Karts nach Anspruch 4, **dadurch gekennzeichnet, dass** der untere Winkel der Handgriffe (7a, 9a) zum Erfassen der Hebel in der Weise gebrochen ist, dass ein zufälliges Anstoßen gegen die Knie verhindert wird.

6. Vorrichtung zum manuellen Führen eines Karts nach einem der Ansprüche 3 bis 5, **dadurch gekennzeichnet, dass** die Betätigungshebel (7, 9) so angebracht sind, dass sie unter dem Lenkrad (11) angelenkt sind, beispielsweise auf dessen Schenkeln oder über einer am Lenkrad befestigten Platte (27).

7. Vorrichtung zum manuellen Führen eines Karts nach einem der Ansprüche 4 bis 7, **dadurch gekennzeichnet, dass** die Handgriffe (7a, 9a) abnehmbar für einen raschen Einbau und Ausbau so angebracht sind, dass bei Bedarf eine Umstellung auf normale Führung des Karts mit den Füßen möglich ist.

8. Vorrichtung zum manuellen Führen eines Karts nach einem der Ansprüche 4 bis 7, **dadurch gekennzeichnet, dass** der Handgriff (7a) für die Bremse sich über einen Winkelbereich erstreckt, der größer ist als der Winkelbereich des Handgriffs (9a) für das Gaspedal.

9. Vorrichtung zum manuellen Führen eines Karts nach einem der vorhergehenden Ansprüche, **dadurch gekennzeichnet, dass** die Rückstellung der Handgriffe bzw. Hebel (7, 9) in neutrale Stellung über Federn (19c) erfolgt, die vorzugsweise in Höhe des Getriebes (19) und/oder gegebenenfalls in Höhe der Pedale, insbesondere des Bremspedals am Punkt (19d₂), angeordnet sind.

10. Vorrichtung zum manuellen Führen eines Karts nach einem der vorhergehenden Ansprüche, **dadurch gekennzeichnet, dass** das Getriebe zur Bewegungsübertragung (19) ein mechanisches Getriebe mit Seilzügen (17) ist, die über eine Untersetzungsvorrichtung oder Übersetzungsvorrichtung beispielsweise mit einer Seilscheibe (19a, 19b) und über eine Seilschleife (19d, 19e) mit dem Bremspedal (3) und dem Gaspedal (5) des Karts verbunden sind.

11. Vorrichtung zum manuellen Führen eines Karts nach einem der Ansprüche 1 bis 9, **dadurch gekennzeichnet, dass** das Getriebe (19) ein elektronisches Getriebe ist, welches mit Sensoren zum Erfassen der Bewegung jedes der Hebel (7, 9) beispielsweise in der Art eines Potentiometers verbunden ist, wobei die Bewegung in ein Stromsignal umgewandelt und in geeigneter Weise verstärkt wird, um Antriebsorgane jeweils zur Betätigung der Bremse und des Bremspedals des Karts anzusteuern.

12. Vorrichtung zum manuellen Führen eines Karts nach einem der Ansprüche 1 bis 9, **dadurch gekennzeichnet, dass** das Getriebe (19) ein kombiniertes Getriebe mit Seilzügen für die Bewegungsübertragung und mit einer Servo-Einrichtung ist, die entsprechend dem Fahrzeugführer einstellbar ist.

13. Vorrichtung zum manuellen Führen eines Karts nach einem der vorhergehenden Ansprüche, **dadurch gekennzeichnet, dass** sie einen abnehmbaren Kippbügel (21) aufweist, durch welchen die Füße und Beine von Personen, die an den unteren Gliedmaßen behindert sind, gehalten werden.

14. Vorrichtung zum manuellen Führen eines Karts nach Anspruch 1, **dadurch gekennzeichnet, dass** die Hebel zur manuellen Betätigung auf derselben Seite des Lenkrads zu den Handgriffen für die betrennte Betätigung des Gaspedals und der Bremse ausgerichtet sind.

15. Vorrichtung zum manuellen Führen eines Karts nach Anspruch 1, **dadurch gekennzeichnet, dass** im Grenzfall die Hebel durch einen einzigen Hebel ersetzt werden können, wobei der Handgriff in zwei einander entgegengesetzten Richtungen betätigt werden kann, und zwar zur Betätigung der Bremse in eine Richtung und zur Betätigung des Gaspedals in die andere Richtung.

16. Kart oder Kraftfahrzeug oder Fahrzeug mit Eigenantrieb, **dadurch gekennzeichnet, dass** es mit einer Vorrichtung zum manuellen Führen ausgerüstet ist, wie sie in einem der vorhergehenden Ansprüche umrissen ist.
